# EUROPÄISCHE PATENTSCHRIFT

(11) **EP 2 291 572 B1**
(45) Veröffentlichungstag und Bekanntmachung des Hinweises auf die Patenterteilung: **27.11.2019**
(21) Anmeldenummer: 09749317.5
(22) Anmeldetag: 19.05.2009
(51) Int. Cl.: E05F 5/00, E05F 5/04, E05F 3/14

(54) **DÄMPFVORRICHTUNG FÜR MÖBELTEILE ODER MÖBELBESCHLAGTEILE**
DAMPING DEVICE FOR FURNITURE COMPONENTS OR FURNITURE FITTING COMPONENTS
SYSTÈME D'AMORTISSEMENT DE PARTIES DE MEUBLES OU DE FERRURES DE MEUBLES

(30) Priorität: 19.05.2008 AT 7902008
(43) Veröffentlichungstag der Anmeldung: 09.03.2011
(73) Patentinhaber: Julius Blum GmbH, 6973 Höchst (AT)
(72) Erfinder: KRAMMER, Bernhard, A-6973 Höchst (AT); HOLZAPFEL, Andreas, A-6900 Bregenz (AT)
(74) Vertreter: Torggler & Hofinger Patentanwälte
(86) Internationale Anmeldenummer: PCT/AT2009/000205
(87) Internationale Veröffentlichungsnummer: WO 2009/140706

(56) Entgegenhaltungen:
- EP-A1- 1 739 261
- WO-A1-2008/135155
- DE-U1- 20 107 068
- US-A1- 2002 096 405
- US-A1- 2004 144 604

## Beschreibung

Die vorliegende Erfindung bezieht sich auf eine Dämpfvorrichtung mit den Merkmalen des Oberbegriffs des Patentanspruchs 1.

Im Weiteren betrifft die Erfindung ein Möbelscharnier, eine Ausziehführung für Schubladen sowie einen Stellmechanismus zum Bewegen einer Möbelklappe mit einer Dämpfvorrichtung der zu beschreibenden Art.

Beim Stand der Technik ist es bekannt, Möbel oder Möbelbeschläge mit einer Dämpfvorrichtung auszurüsten, sodass eine gedämpfte Bewegung des bewegbaren Möbelteils oder des Möbelbeschlages in wenigstens eine Endlage stattfinden kann. Hierbei wird ein der Dämpfvorrichtung zugeordnetes Betätigungselement ab einer bestimmten Relativstellung des Möbelbeschlages von einem Anschlagteil oder vom bewegbaren Möbelteil selbst beaufschlagt, was den Beginn den Dämpfungsvorganges einleitet. Beim Einsatz von Möbelbeschlägen mit integrierter Dämpfung kann es jedoch vorkommen, dass das zu bewegende Möbelteil zu stark abgebremst wird, sodass die daraus resultierende Schließ- bzw. Öffnungszeit des bewegbaren Möbelteiles ein tolerierbares Maß überschreitet. Im Extremfall ist es sogar möglich, dass überhaupt keine vollständige Bewegung des bewegbaren Möbelteils bis hin zu der gewünschten Endlage möglich ist.

In der WO 2008/135155 A1 ist ein Möbelscharnier mit einem Scharniertopf offenbart, an welchem eine Dämpfungsvorrichtung in Form eines Lineardämpfers angeordnet ist. Der Lineardämpfer umfasst einen Dämpfungszylinder und eine relativ dazu verschiebbar gelagerte Kolbenstange, die durch eine schwenkbar gelagerte Klappe des Möbelscharniers beaufschlagbar ist. Am Scharnierarm ist ein Anschlagvorsprung ausgebildet, der die Schwenkklappe gegen Ende der Schließbewegung des Möbelscharniers gegen die Kolbenstange drückt, sodass die Kolbenstange zur Ausführung eines Dämpfungshubes in den Dämpfungszylinder eingedrückt wird.

Aufgabe der vorliegenden Erfindung ist es daher, eine Dämpfvorrichtung der eingangs erwähnten Gattung anzugeben, die es einer Person ermöglicht, ob eine in einer Richtung verlaufende Bewegung eines bewegbaren Möbelteiles wahlweise gedämpft oder ungedämpft abläuft.

Dies wird erfindungsgemäß durch die Merkmale des Patentanspruchs 1 gelöst. Weitere Ausführungsbeispiele der Erfindung sind in den abhängigen Unteransprüchen angegeben.

Durch eine manuelle Verstellung des Schaltorgans kann der Dämpfer in einer ersten Schaltstellung des Schaltorgans der schaltbaren Kupplung eine Relativbewegung der beiden Teile des Möbels oder des Möbelbeschlages dämpfen. In einer zweiten Schaltstellung des Schaltorgans der schaltbaren Kupplung hingegen übt der Dämpfer auf die beiden Teile des Möbels oder des Möbelbeschlages keine Dämpfwirkung aus.

Das Schaltorgan der schaltbaren Kupplung ermöglicht also dem Benutzer, ob der Dämpfer eine Dämpfwirkung generieren soll oder nicht. Das Schaltorgan beeinflusst also das wahlweise Trennen oder Verbinden des in die Dämpfvorrichtung eingeleiteten Kraftflusses. Es ist also vorgesehen, dass der Dämpfer bei geschlossener Kupplung die Relativbewegung der beiden Teile dämpft und bei geöffneter Kupplung die Dämpfwirkung deaktiviert ist.

Gemäß einer Ausführungsvariante der Erfindung kann vorgesehen sein, dass der erste Teil des Möbels bzw. Möbelbeschlages den Dämpfer über ein bewegbares Betätigungselement beaufschlagt, wobei die schaltbare Kupplung zwischen dem Betätigungselement und dem Dämpfer angeordnet ist, wobei das Betätigungselement in einer ersten Schaltstellung der schaltbaren Kupplung mit dem Dämpfer bewegungsgekoppelt ist, und wobei das Betätigungselement in einer zweiten Schaltstellung der schaltbaren Kupplung unabhängig vom Dämpfer frei bewegbar ist. Mit anderen Worten kann die Übertragung des Kraftflusses auf den Dämpfer durch eine solche Anordnung der schaltbaren Kupplung zwischen dem Betätigungselement und dem Dämpfer von vorne herein getrennt werden.

Gemäß der Erfindung ist vorgesehen, dass der Dämpfer zwei bei einem Dämpfungshub relativ zueinander bewegbar gelagerte Dämpfungsbauteile aufweist, wobei die schaltbare Kupplung in einer ersten Schaltstellung des Schaltorgans einen der beiden Dämpfungsbauteile arretiert, sodass beim Dämpfungshub eine Relativbewegung zwischen den beiden Dämpfungsbauteilen und damit eine Dämpfwirkung der Dämpfvorrichtung stattfindet und wobei die schaltbare Kupplung in einer zweiten Schaltstellung des Schaltorgans den Dämpfungsbauteil freigibt, sodass beim Dämpfungshub keine Relativbewegung der beiden Dämpfungsbauteile und damit keine Dämpfwirkung der Dämpfvorrichtung stattfindet. Mit anderen Worten kann durch eine eingeschaltene Kupplung einer der beiden Dämpfungsbauteile arretiert werden, wobei sich der andere Dämpfungsbauteil beim Dämpfungshub gegen den so arretierten ersten Dämpfungsbauteil verdrehen lässt. Zwischen den beiden Dämpfungsbauteilen ist ein vorzugsweise viskoses Dämpfungsfluid angeordnet, wobei bei einer Relativbewegung der beiden Dämpfungsbauteile auf dieses Dämpfungsfluid Scherkräfte wirken, die die Dämpfwirkung hervorrufen. Im ausgeschalteten Zustand der schaltbaren Kupplung hingegen verharren die beiden Dämpfungsbauteile in ihrer Relativposition zueinander, wobei auf das zwischen den Dämpfungsbauteilen angeordnete Dämpfungsmedium keine Scherkräfte wirken, wodurch auch keine Dämpfwirkung generiert wird.

Die schaltbare Kupplung kann als eine durch das Schaltorgan fremdgeschaltene, kraftschlüssige Kupplungsvorrichtung ausgebildet sein. Hierbei kann es zweckmäßig sein, wenn die schaltbare Kupplung mehrere Kupplungselemente aufweist, durch die in der ersten Schaltstellung des Schaltorgans eine Klemmverbindung zwischen einem der Dämpfungsbauteile und einem Halteteil herstellbar ist. In der zweiten Schaltstellung des Schaltorgans sind die Kupplungselemente in eine Lage bewegbar, in der der Dämpfungsbauteil mit dem Halteteil nicht kuppelt.

Der Halteteil kann gemäß einem bevorzugten Ausführungsbeispiel vom Dämpfergehäuse, von einem zentralen Zapfen oder von einer anderen - vorzugsweise ortsfesten - Struktur der Dämpfvorrichtung gebildet werden.

Die Kupplungselemente sind also zwischen dem Halteteil und einem der Dämpfungsbauteile wirksam, wobei die Kupplungselemente - je nach Schaltstellung des Schaltorgans - entweder eine klemmende Verbindung zwischen dem Halteteil und einem der Dämpfungsbauteile herstellen oder im anderen Fall eine Relativbewegung zwischen dem Dämpfungsbauteil und dem Halteteil erlauben.

Der Möbelbeschlag mit der erfindungsgemäßen Dämpfvorrichtung kann entweder als Möbelscharnier, als Ausziehführung für Schubladen oder als Stellmechanismus zum Bewegen einer Möbelklappe ausgeführt werden. Die in Rede stehende Dämpfvorrichtung kann hierbei so angeordnet werden, dass sie eine Relativbewegung - insbesondere einer Linearbewegung und/oder eine Verschwenkbewegung - von mindestens zwei an einem Möbelteil zu befestigenden Anschlagteilen dämpft. Bei Möbelscharnieren kann hierbei die Relativbewegung von Scharniertopf zu Scharnierarm, bei einer Ausziehführung für Schubladen die Relativbewegung zweier Schienen und bei einem Stellmechanismus die Verschwenkbewegung eines zum Bewegen der Möbelklappe vorgesehenen Stellarmes gedämpft werden. Aus Gründen der Einfachheit wird in den angehängten Figuren die Anordnung einer Dämpfvorrichtung an einem Möbelscharnier gezeigt. Für zuständigen Fachmann ist es anhand der gezeigten Ausführungsbeispiele unmittelbar einsichtig, wie die Anordnung der Dämpfvorrichtung an einer Ausziehführungsgarnitur für Schubladen oder an einem Stellmechanismus zum Bewegen einer Möbelklappe zu erfolgen hat.

Weitere Einzelheiten und Vorteile der vorliegenden Erfindung werden anhand der nachfolgenden Figurenbeschreibung erläutert. Dabei zeigt bzw. zeigen:
- Fig. 1a, 1b: eine stark schematisierte Darstellung einer schaltbaren Kupplung in zwei verschiedenen Schaltstellungen, wobei die schaltbare Kupplung zwischen dem Betätigungselement des Dämpfers und dem eigentlichen Dämpfer wirksam ist,
- Fig. 2a, 2b: eine stark schematisierte Darstellung einer schaltbaren Kupplung in zwei verschiedenen Schaltstellungen, wobei die schaltbare Kupplung zur wahlweisen Arretierung eines Dämpferbauteiles vorgesehen ist,
- Fig. 3a, 3b: eine schematische Darstellung eines Lineardämpfers mit geschlossener schaltbarer Kupplung am Beginn und am Ende des Dämpfungshubes,
- Fig. 4a, 4b: schematische Darstellungen eines Lineardämpfers mit offener schaltbarer Kupplung, wobei die Dämpffunktion des Dämpfers deaktiviert ist,
- Fig. 5a, 5b: ein nicht erfindungsgemäßes Ausführungsbeispiel eines Lineardämpfers mit einer geschlossenen Kupplung, die zwischen zwei Teilen der Kolbenstange wirksam ist,
- Fig. 6a, 6b: das Ausführungsbeispiel gemäß Fig. 5a, 5b mit gelöster Kupplung,
- Fig. 7: ein mögliches Ausführungsbeispiel eines Möbelscharniers mit einer erfindungsgemäßen Dämpfvorrichtung,
- Fig. 8a, 8b: Schnittdarstellungen der Dämpfvorrichtung mit gelöster Kupplung, wodurch die Dämpffunktion deaktiviert wird,
- Fig. 9a, 9b: Schnittdarstellungen der Dämpfvorrichtung mit geschlossener Kupplung, wobei eine Dämpffunktion des Dämpfers erfolgt,
- Fig. 10a, 10b: perspektivische Schnittdarstellungen der Dämpfvorrichtung mit geschlossener Kupplung, wodurch eine Dämpffunktion erfolgt,
- Fig. 11a, 11b: perspektivische Schnittdarstellungen der Dämpfvorrichtung mit einer offenen Kupplung, wodurch die Dämpffunktion deaktiviert ist,
- Fig. 12: eine Explosionsdarstellung eines Möbelscharniers mit einer Dämpfvorrichtung und einem Rückstellmechanismus für das Betätigungselement.

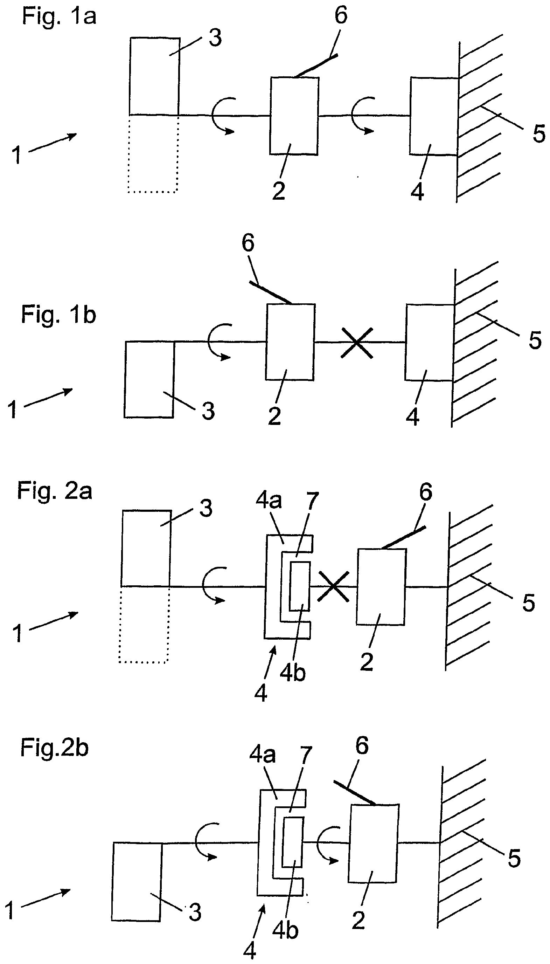

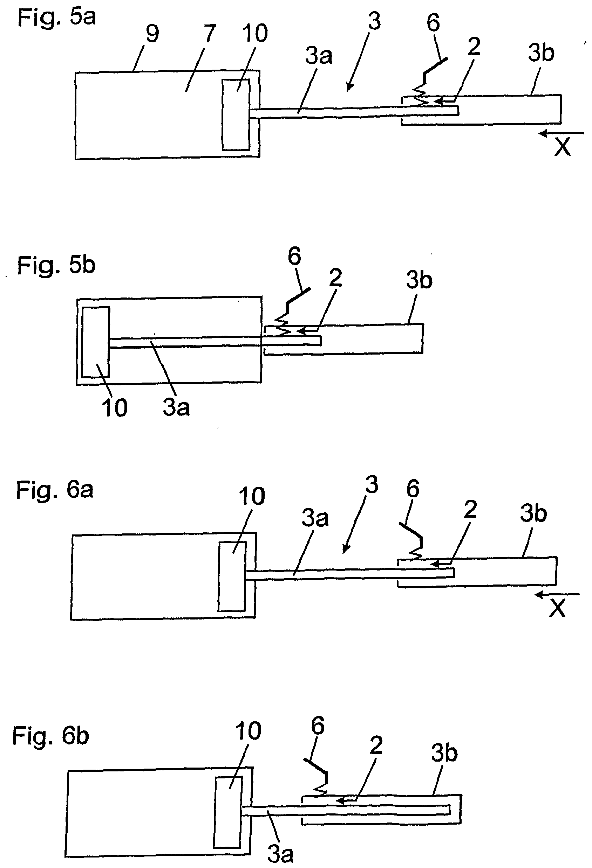

Das grundsätzliche Wesen der Erfindung sei anhand der stark schematisierten Darstellungen gemäß Fig. 1a, 1b bis Fig. 6a, 6b erläutert:
Fig. 1a und Fig. 1b zeigen die Anordnung einer Dämpfvorrichtung 1 mit einer schaltbaren Kupplung 2, die zwischen einem Betätigungselement 3 und dem eigentlichen Dämpfer 4 wirksam ist. Der Dämpfer 4 lagert an einer Struktur 5, die beispielsweise ein Möbelteil oder ein Teil eines Möbelbeschlages ist. Die schaltbare Kupplung 2 umfasst ein manuell betätigbares Schaltorgan 6, das sich in Fig. 1a in einer Schaltstellung befindet, die eine gedämpfte Bewegung des Betätigungselementes 3 herstellt. Wird das Betätigungselement 3 des Dämpfers 4 von einer Kraft beaufschlagt, so kann das Betätigungselement 3 in die punktiert gekennzeichnete Position bewegt werden, was durch den zwischen dem Betätigungselement 3 und der schaltbaren Kupplung 2 eingezeichneten Pfeil verdeutlicht wird. Da sich das Schaltorgan 6 der schaltbaren Kupplung 2 in einer ersten Schaltstellung befindet, wird auch der durch das Betätigungselement 3 eingeleitete Kraftfluss auf den eigentlichen Dämpfer 4 übertragen (Pfeil zwischen schaltbarer Kupplung 2 und Dämpfer 4), wodurch auch die Bewegung des Betätigungselementes 3 (und damit die Bewegung eines Möbelteiles oder eines Möbelbeschlagteiles) gedämpft wird.

In Fig. 1b hingegen ist das Schaltorgan 6 der schaltbaren Kupplung 2 in einer zweiten Schaltstellung gezeigt. In dieser Schaltstellung des Schaltorgans 6 wird eine Bewegung des Betätigungselementes 3 (Pfeil zwischen Betätigungselement 3 und schaltbarer Kupplung 2) erst gar nicht auf den eigentlichen Dämpfer 4 übertragen. Das Betätigungselement 3 kann zwar innerhalb vorgegebener Grenzen unabhängig vom Dämpfer 4 frei bewegt werden, jedoch wird diese Bewegung vom Dämpfer 4 nicht gedämpft. Der getrennte Kraftfluss zwischen der schaltbaren Kupplung 2 und dem Dämpfer 4 wird durch das eingezeichnete Kreuz symbolisiert.

In Fig. 2a und Fig. 2b ist eine zweite Ausführungsvariante der Erfindung in stark schematisierter Weise dargestellt. Auch hier umfasst die Dämpfvorrichtung 1 ein Betätigungselement 3, das von einem (nicht dargestellten) Möbelteil oder von einem Teil eines Möbelbeschlages beaufschlagbar ist. Im Gegensatz zu den Fig. 1a, 1b steht das Betätigungselement 3 - zumindest während des Dämpfungshubes - in Wirkverbindung mit einem Dämpfungsbauteil 4a des Dämpfers 4. Eine Bewegung des Betätigungselementes 3 in die punktiert gekennzeichnete Lage führt also auch zu einer Bewegung des Dämpfungsbauteiles 4a. Der Dämpfer 4 ist im gezeigten Ausführungsbeispiel als Rotationsdämpfer mit zwei relativ zueinander verdrehbaren Dämpfungsbauteilen 4a, 4b ausgeführt. Zwischen diesen beiden Dämpfungsbauteilen 4a, 4b ist ein Dämpfungsfluid 7 (beispielsweise ein Silikonöl oder ein Dämpfungsmedium mit hoher Viskosität) wirksam. Wesentlich ist, dass die schaltbare Kupplung 2 mit dem Schaltorgan 6 zwischen dem zweiten Dämpfungsbauteil 4b und einer - vorzugsweise ortsfesten - Struktur 5 wirksam ist. In Fig. 2a befindet sich das Schaltorgan 6 in einer Schaltstellung, in der die schaltbare Kupplung 2 den zweiten Dämpfungsbauteil 4b arretiert, was durch das eingezeichnete Kreuz zwischen dem zweiten Dämpfungsbauteil 4b und der schaltbaren Kupplung 2 verdeutlicht wird. Wird also der erste Dämpfungsbauteil 4a durch eine Bewegung des Betätigungselementes 3 bewegt, so kommt es zu einer Relativbewegung zwischen dem ersten Dämpfungsbauteil 4a und dem arretierten zweiten Dämpfungsbauteil 4b, wobei während dieser Bewegung Scherkräfte auf das Dämpfungsmedium 7 wirken, die eine gedämpfte Bewegung des ersten Dämpfungsbauteiles 4a (und damit des Betätigungselementes 3) herbeiführen. In Fig. 2b hingegen befindet sich das Schaltorgan 6 in einer Schaltstellung, die keine Dämpfwirkung des Betätigungselementes 3 bewirkt. In dieser Schaltstellung des Schaltorgans 6 wird der zweite Dämpfungsbauteil 4b des Dämpfers 4 durch die Kupplung 2 nicht arretiert. Wird nun eine Bewegung des Betätigungselementes 3 in den ersten Dämpfungsbauteil 4a eingeleitet, so wird diese Bewegung über das viskose Dämpfungsmedium 7 auch auf das zweite Dämpfungsbauteil 4b übertragen, wodurch sich der zweite Dämpfungsbauteil 4b aufgrund des wirkenden Dämpfungsmediums mit dem ersten Dämpfungsbauteil 4a mitbewegt. Somit verharren also in Fig. 2b die beiden Dämpfungsbauteile 4a, 4b in ihrer Relativstellung zueinander. Da hierbei keine Relativbewegung der beiden Dämpfungsbauteile 4a, 4b stattfindet, wird auch keine Dämpfwirkung des Dämpfers 4 erzeugt. Das Betätigungselement 3 kann sich in Fig. 2b zwar innerhalb vorgegebener Grenzen bewegen, allerdings wird diese Bewegung nicht gedämpft.

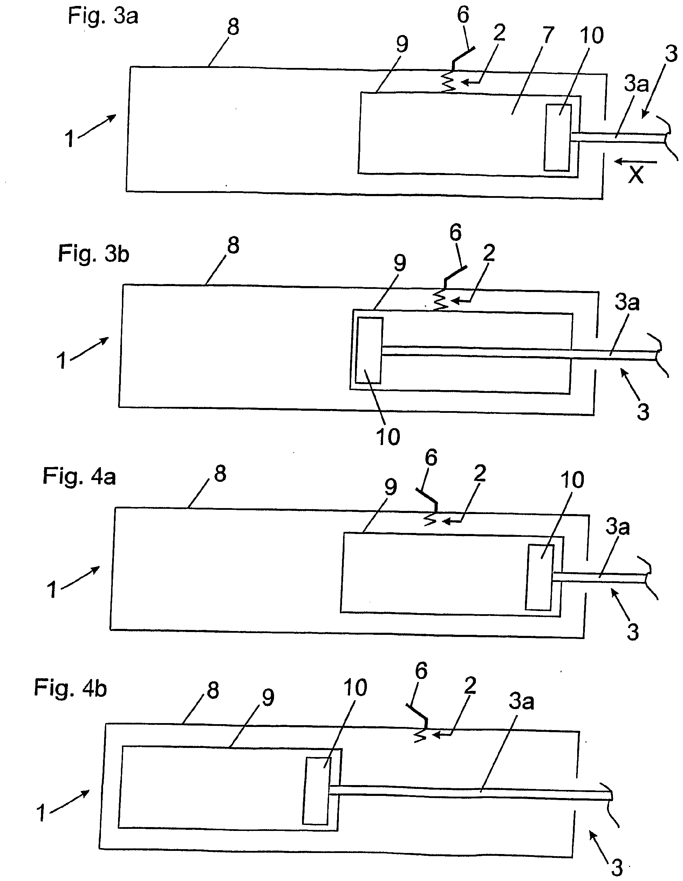

In Fig. 3a und Fig. 3b ist in stark schematisierter Weise ein Ausführungsbeispiel mit einem Lineardämpfer gezeigt. Die Dämpfvorrichtung 1 umfasst ein Gehäuse 8, in dem ein Zylinder 9 des Lineardämpfers beweglich - insbesondere verschiebbar - angeordnet ist. Innerhalb des Zylinders 9 ist in einer an sich bekannten Weise ein Kolben 10 verschiebbar gelagert. Das Betätigungselement 3 ist im gezeigten Ausführungsbeispiel als Kolbenstange 3a ausgebildet. Nur schematisch angedeutet ist eine schaltbare Kupplung 2 mit einem Schaltorgan 6, wodurch der Zylinder 9 relativ zum Gehäuse 8 arretierbar ist. Die arretierte Stellung des Zylinders 9 ist in Fig. 3a gezeigt. Wird nun das Betätigungselement 3 in Form der Kolbenstange 3a von einem Möbelteil oder von einem Möbelbeschlagteil während des Dämpfungshubes in Richtung des eingezeichneten Pfeils X eingedrückt, so wird die Bewegung des Kolbens 10 durch das Vorhandensein eines Dämpfungsfluids 7 im Inneren des Zylinders 9 abgebremst. Es kann also eine gedämpfte Bewegung der Kolbenstange 3a bis hin zu der in Fig. 3b gezeigten Endlage des Kolbens 10 erfolgen.

In Fig. 4a hingegen wurde das Schaltorgan 6 der schaltbaren Kupplung 2 in eine zweite Schaltstellung bewegt, wodurch die Arretierung zwischen dem Gehäuse 8 und dem Zylinder 9 aufgehoben wurde. Somit ist der Zylinder 9 innerhalb des Gehäuses 8 im Wesentlichen frei verschiebbar. Wenn nun ausgehend von Fig. 4a das Betätigungselement 3 in Form der Kolbenstange 3a von einer Kraft beaufschlagt wird, so kann der Zylinder 9 ganz in das Gehäuse 8 hineinverschoben werden, ohne dass sich dabei die relative Lage des Kolbens 10 in Bezug zum Zylinder 9 wesentlich ändert. Die Bewegung der Kolbenstange 3a mit gelöster Kupplung 2 gemäß Fig. 4b erfolgt daher im Wesentlichen ungebremst.

Fig. 5a und Fig. 5b zeigen ein Ausführungsbeispiel einer nicht erfindungsgemäßen Dämpfvorrichtung 1. Der Dämpfer 4 ist als Lineardämpfer mit einem Zylinder 9 und einem darin verschiebbaren Kolben 10 ausgebildet. Das Betätigungselement 3 ist im gezeigten Ausführungsbeispiel als Kolbenstange mit zwei zueinander bewegbaren Teilen 3a und 3b ausgeführt. Zwischen den beiden Teilen 3a und 3b der Kolbenstange ist eine - schematisch skizzierte - Kupplung 2 wirksam. In Fig. 5a liegt der eingekuppelte Zustand der Kupplung 2 vor, in der die beiden Teile 3a und 3b der Kolbenstange gegeneinander unverschiebbar gehalten sind. Eine in Richtung X eingeleitete Bewegung wird daher gedämpft, wobei der Kolben 10 im Zylinder 9 bis hin zu der in Fig. 5b gezeigten Endlage bewegbar ist.

Fig. 6a und Fig. 6b zeigen das Ausführungsbeispiel gemäß Fig. 5a und Fig. 5b mit einer offenen Kupplung 2. In dieser Schaltstellung der Kupplung 2 sind die beiden Teile 3a und 3b der Kolbenstange bei einer in Richtung X eingeleiteten Bewegung relativ zueinander verschiebbar. Wenn also ein bewegbares Möbelteil oder ein Möbelbeschlagteil die Kolbenstange in Richtung X beaufschlagt, so werden nur die beiden Teile 3a und 3b relativ zueinander verschoben. Somit bleibt die Lage des Kolbens 10 relativ zum Zylinder 9 aufgrund des Fluiddrucks im Zylinder 9 im Wesentlichen unverändert, wodurch auch keine Dämpfung der eingeleiteten Bewegung erfolgt. Zur Realisierung der Kupplung 2 können beispielsweise die beiden Teile 3a, 3b relativ zueinander bewegbar - vorzugsweise relativ zueinander verdrehbar - sein. Beispielhaft lässt sich hierbei eine Konstruktion realisieren, wobei in einer ersten Drehstellung des Teiles 3b relativ zum Teil 3a eine geschlossene Kupplung mit relativ zueinander unverschiebbaren Teilen 3a, 3b realisiert werden kann. In einer von der ersten Drehstellung abweichenden zweiten Drehstellung des Teiles 3b relativ zum Teil 3a kann hingegen eine offene Kupplung 2 realisiert werden, die eine Axialbewegung der beiden Teile 3a, 3b zulässt. Das Schaltorgan 6 kann - wie auch in allen anderen Ausführungsbeispielen - entweder als separater Teil der Dämpfvorrichtung 1 oder auch als integraler Teil der Dämpfungsbauteile bzw. des Betätigungselementes 3 (im vorliegenden Fall einstückig mit einem der beiden Teile 3a, 3b der Kolbenstange) ausgeführt werden.

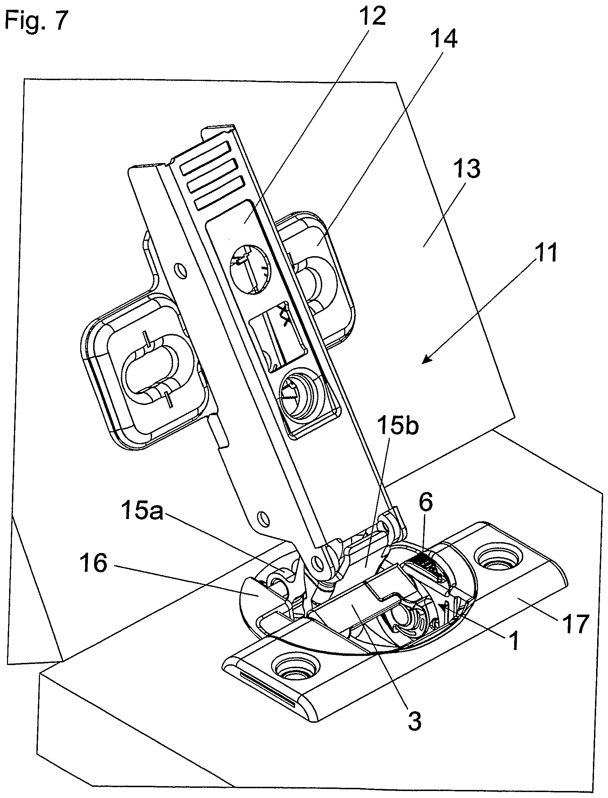

In Fig. 7 ist eine konkrete Ausführungsmöglichkeit anhand eines Möbelscharniers 11 gezeigt. Das Möbelscharnier 11 umfasst in einer an sich bekannten Weise einen Scharnierarm 12, der an einer am Möbelkorpus 13 zu befestigenden Grundplatte 14 lösbar aufklippsbar ist. Der Scharnierarm 12 ist über einen inneren Gelenkhebel 15a und einen äußeren Gelenkhebel 15b mit einem Scharniertopf 16 gekoppelt. Am Scharniertopf 16 ist ein Flansch 17 angeordnet, wobei sich unter dem Flansch 17 und an einer seitlichen Außenwand des Scharniertopfes 16 eine Dämpfvorrichtung 1 befindet. Die Dämpfvorrichtung 1 ist im gezeigten Ausführungsbeispiel als Rotationsdämpfer mit einem Betätigungselement 3 ausgebildet. Das Betätigungselement 3 ist relativ zum Scharniertopf 16 drehbar gelagert und wird im Zuge der Schließbewegung des Möbelscharniers 11 ab einer bestimmten Relativstellung des Möbelscharniers 11 vom äußeren Gelenkhebel 15b beaufschlagt. Das drehbare Betätigungselement 3 kann also vom äußeren Gelenkhebel 15b während des Dämpfungshubes in den Scharniertopf 16 hineingedrückt werden, wobei diese Bewegung gemäß dem Aspekt der vorliegenden Erfindung wahlweise gedämpft oder ungedämpft ablaufen kann. Ermöglicht wird dies durch ein händisch zu betätigendes Schaltorgan 6, das im gezeigten Ausführungsbeispiel als verschiebbarer Schalter mit zwei Schaltstellungen ausgeführt ist. Das Schaltorgan 6 ist beispielhaft am Scharniertopf 16 angeordnet, ebenso ist eine Anordnung am Scharnierarm 12 möglich. Auch kann die Dämpfvorrichtung 1 am Scharnierarm 12 angeordnet werden.

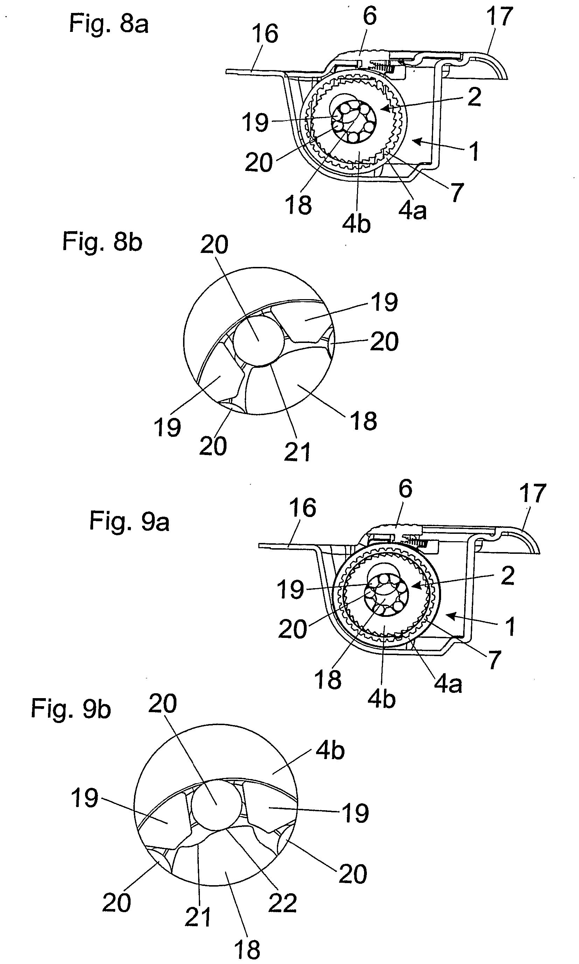

Fig. 8a und Fig. 8b zeigen einen dämpferseitigen Vertikalschnitt des Scharniertopfes 16 gemäß Fig. 7. An der seitlichen Außenwand des Scharniertopfes 16 und unterhalb des Flansches 17 ist eine Dämpfvorrichtung 1 befestigt, wobei die Dämpfvorrichtung 1 als Rotationsdämpfer ausgebildet ist. Die Dämpfvorrichtung 1 umfasst einen ersten Dämpfungsbauteil 4a, der als ringförmiger Teil ausgeführt ist. Das in Fig. 7 dargestellte Betätigungselement 3 ist drehfest mit dem ersten Dämpfungsbauteil 4a verbunden, sodass sich der erste Dämpfungsbauteil 4a mit dem Betätigungselement 3 mitbewegt. Im Weiteren umfasst die Dämpfvorrichtung 1 einen zweiten Dämpfungsbauteil 4b, der koaxial zum ersten Dämpfungsbauteil 4a angeordnet ist. Der erste Dämpfungsbauteil 4a und das zweite Dämpfungsbauteil 4b sowie das Betätigungselement 3 sind also um eine gemeinsame Rotationsachse bewegbar. Zwischen den beiden Dämpfungsbauteilen 4a, 4b ergibt sich ein ringförmiger Freiraum zur Aufnahme eines Dämpfungsmediums 7. Die Dämpfungsbauteile 4a, 4b weisen zueinander gerichtete Verzahnungen zur Erhöhung der auf das Dämpfungsmedium 7 wirkenden Scherkräfte auf. Ferner ist ein Halteteil 18 erkennbar, der als starrer, zentraler Zapfen ausgeführt ist. Ebenso kann der Halteteil 18 auch von einem Gehäuseteil der Dämpfvorrichtung 1 gebildet werden. Um den Umfangsrand des zentralen Halteteiles 18 herum sind durch einen Käfig 19 beabstandete Kupplungselemente 20 angeordnet, die als Kugeln, Rollen oder zylindrische Walzen ausgebildet werden können. Die Kupplungselemente 20 sind in diesem Vertikalschnitt als runde Formen erkennbar, während die Abschnitte des Käfigs 19 im Wesentlichen trapezförmige Formen ausbilden. Aufgabe der Kupplungselemente 20 ist es - je nach Schaltstellung des Betätigungsorgans 6 - eine klemmende Verbindung zwischen dem inneren Dämpfungsbauteil 4b und dem starren, zapfenförmigen Halteteil 18 herzustellen. In Fig. 8b ist der in Fig. 8a eingekreiste Bereich im vergrößerten Maßstab dargestellt, wobei in Fig. 8a und Fig. 8b keine Arretierung des inneren Dämpfungsbauteiles 4b vorliegt. Bei einer Beaufschlagung des in Fig. 7 dargestellten Betätigungselementes 3 wird also der mit dem Betätigungselement 3 drehfest verbundene äußere Dämpfungsbauteil 4a mitgedreht, wobei durch die offene Kupplung 2 der innere Dämpfungsbauteil 4b über das viskose Dämpfungsmedium 7 mitgedreht wird. Es liegt daher in Fig. 8a, 8b keine Relativbewegung zwischen dem äußeren Dämpfungsbauteil 4b und dem inneren Dämpfungsbauteil 4a vor, wodurch auch keine gedämpfte Bewegung des Betätigungselementes 3 erfolgt. In Fig. 8b ist der zentrale Halteteil 18 erkennbar, an dessen Umfangsrand herum Vertiefungen 21 zur Aufnahme der Kupplungselemente 20 ausgebildet sind. In Fig. 8b befinden sich die Kupplungselemente 20 in diesen Vertiefungen 21, sodass keine kraftschlüssige Verbindung zwischen dem starren Halteteil 18 und dem inneren Dämpfungsbauteil 4b vorliegt.

In Fig. 9a und Fig. 9b ist hingegen die eingekuppelte Stellung der Kupplungselemente 20 erkennbar. Durch eine Verstellung des Schaltorgans 6 wurde der Käfig 19 über einen Übertragungsmechanismus im Uhrzeigersinn - vorzugsweise innerhalb eines Winkelbereiches zwischen 0° und 30° - verdreht. Ein hier nicht näher erkennbarer Übertragungsmechanismus setzt also eine Linearbewegung des Schaltorgans 6 in eine Drehbewegung des Käfigs 19 um. In Fig. 9b ist eine vergrößerte Detaildarstellung des in Fig. 9a eingekreisten Bereiches dargestellt. Zu erkennen ist eine zu Fig. 8b veränderte Relativstellung des Käfigs 19 zum zentralen Halteteil 18, sodass nunmehr die Kupplungselemente 20 an Schrägflächen 22 des Halteteiles 18 zur Anlage kommen, wobei die Kupplungselemente 20 sowohl mit dem Halteteil 18 als auch mit den inneren Dämpfungsbauteil 4b kraftschlüssig in Verbindung stehen. Auf diese Weise ist also der innere Dämpfungsbauteil 4b relativ zum starren Halteteil 18 arretiert. Wird nun über das in Fig. 7 dargestellte Betätigungselement 3 eine Bewegung eingeleitet, so bewegt sich der äußere Dämpfungsbauteil 4a wieder mit dem Betätigungselement 3 mit. Da aber der innere Dämpfungsbauteil 4b arretiert ist, wirken auf das Dämpfungsmedium 7 Scherkräfte, sodass der äußere Dämpfungsbauteil 4a (und damit das Betätigungselement 3) gedämpft wird.

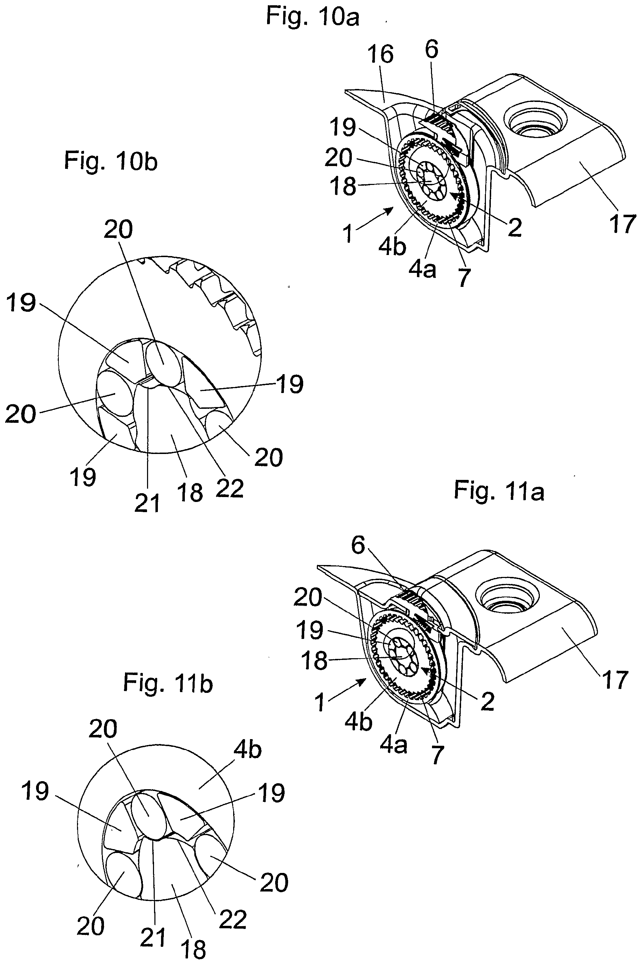

In Fig. 10a und Fig. 10b sind Darstellungen der Klemmstellung - analog zu Fig. 9a, Fig. 9b - jedoch in einer perspektivischen Ansicht gezeigt. Zu erkennen ist die Dämpfvorrichtung 1 mit den beiden zueinander verdrehbaren Dämpfungsbauteilen 4a, 4b und der schaltbaren Kupplung 2 mit dem Schaltorgan 6. Zwischen den Dämpfungsbauteilen 4a, 4b ist ein Dämpfungsmedium 7 wirksam. Fig. 10b zeigt eine vergrößerte Darstellung des in Fig. 10a eingezeichneten Kreises. Zu erkennen ist der zentrale Halteteil 18 mit seinen daran angeordneten Vertiefungen 21 und seinen Schrägflächen 22. Um den Halteteil 18 herum sind mehrere Kupplungselemente 20 angeordnet, die sich gemäß Fig. 10a, 10b zwischen den Schrägflächen 22 des Halteteiles 18 und dem inneren Dämpfungsbauteil 4b verkeilen, sodass eine Dämpfwirkung der Dämpfvorrichtung 1 vorliegt.

In Fig. 11a und Fig. 11b hingegen liegen die Kupplungselemente 20 innerhalb der Vertiefungen 21 des Halteteiles 18, sodass der innere Dämpfungsbauteil 4b in Bezug zum Halteteil 18 nicht arretiert ist. Bei einem Bewegen des äußeren Dämpfungsbauteiles 4a kann also der innere Dämpfungsbauteil 4b mitgedreht werden, wobei die Dämpfungsbauteile 4a, 4b in ihrer Relativstellung zueinander verharren, sodass die Bewegung des Betätigungselementes 3 nicht gedämpft wird.

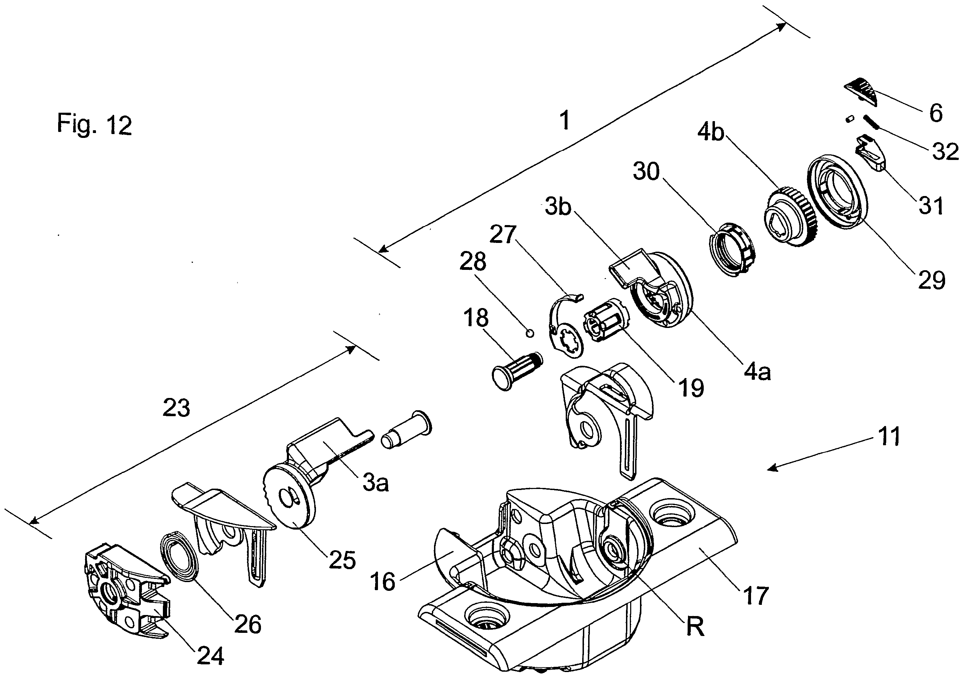

Fig. 12 zeigt das Ausführungsbeispiel des Möbelscharniers 11 in einer Explosionsdarstellung. Mit dem Bezugszeichen 23 ist allgemein ein Rückstellmechanismus gekennzeichnet, durch den das Betätigungselement 3 der Dämpfvorrichtung 1 nach erfolgter Dämpfung wieder in eine Ausgangslage für den nächsten Dämpfungshub bewegbar (vorzugsweise zurückbewegbar) ist. Das Betätigungselement 3 ist im gezeigten Ausführungsbeispiel zweiteilig ausgebildet und umfasst die beiden miteinander zu verbindenden Teile 3a und 3b. Der Rückstellmechanismus 23 umfasst ein stationäres Rückstellgehäuse 24, in dem ein Rotor 25 mit dem Teil 3a des Betätigungselementes 3 drehbar gelagert ist. Eine Rückstellfeder 26 in Form einer Torsionsfeder wirkt zwischen dem stationären Rückstellgehäuse 24 und dem drehbaren Rotor 25, wobei die Rückstellfeder 26 während des Dämpfungshubes aufgeladen wird und im Anschluss daran das Betätigungselement 3 wieder in eine Ausgangsposition für den nächsten Dämpfungshub zurückdreht. Der Rückstellmechanismus 23 für die ordnungsgemäße Rückstellung des Betätigungselementes 3 nach erfolgter Dämpfung ist lediglich beispielhaft gezeigt und kann durch zahlreiche alternative Konstruktionen ersetzt werden.

Die Dämpfvorrichtung 1 hingegen umfasst den vorzugsweise ortsfesten Halteteil 18 mit den daran angeordneten Vertiefungen 21 und Schrägflächen 22 (Fig. 10b). Um den Halteteil 18 herum wird der Käfig 19 aufgeschoben, der zur Lagerung und Distanzierung der hier nicht dargestellten Kupplungselemente 20 vorgesehen ist. Der mit dem Teil 3a verbindbare Teil 3b des Betätigungselementes 3 umfasst den äußeren Dämpfungsbauteil 4a. Im Weiteren ist der innere Dämpfungsbauteil 4b ersichtlich, der je nach Schaltstellung des Schaltorgans 6 wahlweise an den Halteteil 18 ankoppelbar ist. Ein bügelförmiger Teil 27, der den Übertragungsmechanismus zwischen dem Schaltorgan 6 und dem Käfig 19 bildet, wird einerseits auf den Käfig 19 aufgeschoben, andererseits mit seinem freien Ende an das Schaltorgan 6 gekoppelt. Im Weiteren ist ein Verschlusselement 28 erkennbar, das ein Auslaufen des Dämpfungsmediums 7 aus dem Dämpfer verhindert. Ein Deckel 29 bildet den äußeren Abschluss der Dämpfvorrichtung 1, wobei eine Dichtung 30 zwischen dem inneren Dämpfungsbauteil 4b und dem Deckel 29 angeordnet wird. Ein Schaltergehäuse 31 dient zur Lagerung des Schaltorgans 6 am Scharniertopf 16. Darüber hinaus ist eine Feder 32 vorgesehen, durch die der Käfig 19 (und damit die Kupplungselemente 20) in Richtung Arretierstellung vorgespannt werden können, damit ein unmittelbares Einsetzen des Dämpfungshubes bei einer entsprechenden Betätigung des Betätigungselementes 3 sichergestellt wird. Das Betätigungselement 3 und die Dämpfungsbauteile 4a, 4b sind um eine gemeinsame Rotationsachse R drehbar gelagert. Die Dämpfvorrichtung 1 und der Rückstellmechanismus 23 werden als voneinander gesonderte Baueinheiten an gegenüberliegenden Seitenwänden des Scharniertopfes 16 angeordnet.

Die gegenständliche Erfindung beschränkt sich nicht auf die gezeigten Ausführungsbeispiele, sondern umfasst bzw. erstreckt sich auf alle Varianten und technischen Äquivalente, welche in die Reichweite der nachfolgenden Ansprüche fallen können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Die vorgeschlagene Dämpfvorrichtung 1 kann für sich alleine an einem Möbel oder Möbelteil angeordnet werden, oder auch Teil eines Möbelbeschlages bilden.

## Patentansprüche

1. Dämpfvorrichtung (1), umfassend:
- einen an einem ersten Teil eines Möbels oder Möbelbeschlages anordenbaren Dämpfer (4), der von einem zweiten Teil eines Möbels oder Möbelbeschlages betätigbar ist und dabei bei einem Dämpfungshub eine Relativbewegung der beiden Teile dämpft, wobei der Dämpfer (4) zwei beim Dämpfungshub relativ zueinander bewegbar gelagerte Dämpfungsbauteile (4a, 4b) aufweist,
- eine schaltbare Kupplung (2), über welche die Dämpfwirkung des Dämpfers (4) deaktivierbar ist, wobei der Dämpfer (4) beim Dämpfungshub bei geschlossener Kupplung (2) die Relativbewegung der beiden Dämpfungsbauteile (4a, 4b) dämpft und bei einem in der selben Richtung ausgeführten Dämpfungshub bei geöffneter Kupplung (2) die Dämpfwirkung deaktiviert ist, wobei die schaltbare Kupplung (2) mehrere Kupplungselemente (20) aufweist,
- wobei die schaltbare Kupplung (2) in einer ersten Schaltstellung einen der beiden Dämpfungsbauteile (4b) arretiert, sodass beim Dämpfungshub eine Relativbewegung zwischen den beiden Dämpfungsbauteilen (4a, 4b) und damit eine Dämpfwirkung der Dämpfvorrichtung (1) stattfindet und dass die schaltbare Kupplung (2) in einer zweiten Schaltstellung den Dämpfungsbauteil (4b) freigibt, sodass beim Dämpfungshub keine Relativbewegung der beiden Dämpfungsbauteile (4a, 4b) und damit keine Dämpfwirkung der Dämpfvorrichtung (1) stattfindet,
- einen Halteteil (18), durch welchen in der ersten Schaltstellung der Kupplung (2) eine Klemmverbindung zwischen einem der Dämpfungsbauteile (4a, 4b) und den Kupplungselementen (20) herstellbar ist, wobei die Dämpfvorrichtung (1) ein manuell zu betätigendes Schaltorgan (6) aufweist, durch welches die Kupplung (2) zwischen der ersten Schaltstellung und der zweiten Schaltstellung schaltbar ist.

2. Dämpfvorrichtung nach Anspruch 1, **dadurch gekennzeichnet, dass** der zweite Teil des Möbels oder des Möbelbeschlages den Dämpfer (4) über ein bewegbares Betätigungselement (3) beaufschlagt, wobei die schaltbare Kupplung (2) zwischen dem Betätigungselement (3) und dem Dämpfer (4) angeordnet ist, wobei das Betätigungselement (3) in einer ersten Schaltstellung der schaltbaren Kupplung (2) mit dem Dämpfer (4) bewegungsgekoppelt ist, und wobei das Betätigungselement (3) in einer zweiten Schaltstellung der schaltbaren Kupplung (2) unabhängig vom Dämpfer (4) frei bewegbar ist.

3. Dämpfvorrichtung nach Anspruch 1 oder 2, **dadurch gekennzeichnet, dass** die Kupplungselemente (20) in der zweiten Schaltstellung des Schaltorgans (6) in eine Lage bewegbar sind, in der der Dämpfungsbauteil (4b) mit dem Halteteil (18) nicht kuppelt.

4. Dämpfvorrichtung nach Anspruch einem der Ansprüche 1 bis 3, **dadurch gekennzeichnet, dass** der Halteteil (18) vom Dämpfergehäuse oder von einem zentralen Zapfen gebildet ist.

5. Dämpfvorrichtung nach einem der Ansprüche 1 bis 4, **dadurch gekennzeichnet, dass** der Halteteil (18) an dessen Umfangsrand herum Vertiefungen (21) zur Aufnahme der Kupplungselemente (20) aufweist.

6. Dämpfvorrichtung nach einem der Ansprüche 1 bis 5, **dadurch gekennzeichnet, dass** die Kupplungselemente (20) in der ersten Schaltstellung an Schrägflächen (22) des Halteteiles (18) zur Anlage bringbar sind, wobei die Kupplungselemente (20) sowohl mit dem Halteteil (18) als auch mit einem der Dämpfungsbauteile (4a, 4b) kraftschlüssig in Verbindung stehen.

7. Dämpfvorrichtung nach einem der Ansprüche 1 bis 6, **dadurch gekennzeichnet, dass** die Kupplungselemente (20) durch Betätigung des Schaltorgans (6) relativ zum Halteteil (18) bewegbar, vorzugsweise innerhalb eines Winkelbereiches zwischen 0° und 30° verdrehbar, sind.

8. Dämpfvorrichtung nach einem der Ansprüche 1 bis 7, **dadurch gekennzeichnet, dass** die Kupplungselemente (20) in oder an einem Käfig (19) gelagert sind, wobei der Käfig (19) relativ zum Halteteil (18) über die Betätigung des Schaltorgans (6) sowie über einen vom Schaltorgan (6) betätigbaren Übertragungsmechanismus (27) bewegbar ist.

9. Dämpfvorrichtung nach Anspruch 8, **dadurch gekennzeichnet, dass** der Übertragungsmechanismus (27) eine Linearbewegung des Schaltorgans (6) in eine Drehbewegung des Käfigs (19) umsetzt.

10. Dämpfvorrichtung nach Anspruch 8 oder 9, **dadurch gekennzeichnet, dass** der Käfig (19) in Richtung Arretierstellung durch eine Feder (32) vorgespannt ist.

11. Dämpfvorrichtung nach einem der Ansprüche 1 bis 10, **dadurch gekennzeichnet, dass** ein Rückstellmechanismus (23) vorgesehen ist, durch den ein Betätigungselement (3) der Dämpfvorrichtung (1) nach erfolgter Dämpfung in eine Ausgangsposition für den nächsten Dämpfungshub bewegbar ist.

12. Möbelscharnier, Ausziehführung für Schubladen oder Stellmechanismus zum Bewegen einer, insbesondere hochbewegbaren, Möbelklappe mit einer Dämpfvorrichtung nach einem der Ansprüche 1 bis 11.

## Claims

1. A damping device (1), including:
- a damper (4) to be arranged on a first portion of an item of furniture or of a furniture fitting, the damper (4) being configured to be actuated by a second portion of the item of furniture or of the furniture fitting so as to dampen a relative movement of the two portions upon a damping hub, wherein the damper (4) includes two damping components (4a, 4b) configured to be moved relative to one another upon the damping hub,
- a switchable coupling (2) for deactivating a damping action of the damper (4), wherein the damper (4), upon the damping hub, dampens the relative movement of the two damping components (4a, 4b) when the coupling (2) is closed, and wherein the damping action is deactivated upon a damping hub effected in the same direction when the coupling (2) is open, wherein the switchable coupling (2) includes a plurality of coupling elements (20),
- wherein the switchable coupling (2) locks one of the damping components (4b) in a first switching position, so that a relative movement between the two damping components (4a, 4b) and therewith a damping action of the damping device (1) is produced, and that the switchable coupling (2) releases the damping component (4b) in a second switching position, so that no relative movement of the two damping components (4a, 4b) and therewith no damping action of the damping device (1) is produced,
- a holding portion (18) for establishing a clamping connection between one of the damping components (4a, 4a) and the coupling elements (20) in the first switching position of the coupling (2),
wherein the damping device (1) includes a switching organ (6) configured to be manually actuated, and the coupling (2) can be switched between the first switching position and the second switching position by the switching organ (6).

2. The damping device according to claim 1, **characterized in that** the second portion of the item of furniture or of the furniture fitting actuates the damper (4) by a movable actuating element (3), wherein the switchable coupling (2) is arranged between the actuating element (3) and the damper (4), wherein the actuating element (3), in a first switching position of the switchable coupling (2), is movement-coupled to the damper (4), and wherein the actuating element (3), in a second switching position of the switchable coupling (2), is freely movable independently from the damper (4).

3. The damping device according to claim 1 or 2, **characterized in that** the coupling elements (20), in the second switching position of the switching organ (6), can be moved into a position in which the damping component (4b) does not couple with the holding portion (18).

4. The damping device according to one of the claims 1 to 3, **characterized in that** the holding portion (18) is formed by the damper housing or by a central pin.

5. The damping device according to one of the claims 1 to 4, **characterized in that** the holding portion (18) has a peripheral edge and recesses (21) around the peripheral edge for receiving the coupling elements (20).

6. The damping device according to one of the claims 1 to 5, **characterized in that** the coupling elements (20), in the first switching position, are configured to bear against inclined surfaces (22) of the holding portion (18), wherein the coupling elements (20) are connected to the holding portion (18) as well as to one of the damping components (4a, 4b) in a friction-locked manner.

7. The damping device according to one of the claims 1 to 6, **characterized in that** the coupling elements (20) are configured to be moved, preferably rotated within an angle range of between 0° and 30°, relative to the holding portion (18) by an actuation of the switching organ (6).

8. The damping device according to one of the claims 1 to 7, **characterized in that** the coupling elements (20) are supported in or on a cage (19), wherein the cage (19) is configured to be moved relative to the holding portion (18) by an actuation of the switching organ (6) and by a transmission mechanism (27) configured to be actuated by the switching organ (6).

9. The damping device according to claim 8, **characterized in that** the transmission mechanism (27) converts a linear movement of the switching organ (6) into a rotational movement of the cage (19).

10. The damping device according to claim 8 or 9, **characterized in that** the cage (19) is pre-stressed in a direction of the locking position by a spring (32).

11. The damping device according to one of the claims 1 to 10, **characterized in that** a return mechanism (23) is provided by which an actuating element (3) of the damping device (1) can be moved into an initial position for the next damping hub after damping has been effected.

12. A furniture hinge, a drawer pull-out guide for drawers or an actuating mechanism for moving a, in particular upwardly liftable, furniture flap comprising a damping device (1) according to one of the claims 1 to 11.

## Revendications

1. Système d'amortissement (1), comprenant:
- un amortisseur (4) pouvant être disposé au niveau d'une première partie d'un meuble ou d'une ferrure de meuble, qui est actionnable par une deuxième partie d'un meuble ou d'une ferrure de meuble et amortit ce faisant lors d'une course d'amortissement un mouvement relatif des deux parties, dans lequel l'amortisseur (4) présente deux composants d'amortissement (4a, 4b) logés de manière relativement mobile l'un par rapport à l'autre lors de la course d'amortissement,
- un couplage (2) commutable, par le biais duquel l'effet d'amortissement de l'amortisseur (4) est désactivable, dans lequel l'amortisseur (4) amortit lors de la course d'amortissement lorsque le couplage (2) est fermé le mouvement relatif des deux composants d'amortissement (4a, 4b) et l'effet d'amortissement est désactivé lors d'une course d'amortissement réalisée dans la même direction lorsque le couplage (2) est ouvert, dans lequel le couplage (2) commutable présente plusieurs éléments de couplage (20),
- dans lequel le couplage (2) commutable bloque dans une première position de commutation un des deux composants d'amortissement (4b) de sorte que, lors de la course d'amortissement, un mouvement relatif entre les deux composants d'amortissement (4a, 4b) et ainsi un effet d'amortissement du système d'amortissement (1) aient lieu et que le couplage (2) commutable libère le composant d'amortissement (4b) dans une deuxième position de commutation de sorte que, lors de la course d'amortissement, aucun mouvement relatif des deux composants d'amortissement (4a, 4b) et ainsi aucun effet d'amortissement du système d'amortissement (1) n'ait lieu,
- un élément de retenue (18), par lequel dans la première position de commutation du couplage (2), une liaison par serrage peut être établie entre un des composants d'amortissement (4a, 4b) et les éléments de couplage (20),
dans lequel le système d'amortissement (1) présente un organe de commutation (6) à actionner manuellement, par lequel le couplage (2) est commutable entre la première position de commutation et la deuxième position de commutation.

2. Système d'amortissement selon la revendication 1, **caractérisé en ce que** la deuxième partie du meuble ou de la ferrure de meuble sollicite l'amortisseur (4) par le biais d'un élément d'actionnement (3) mobile, dans lequel le couplage (2) commutable est disposé entre l'élément d'actionnement (3) et l'amortisseur (4), dans lequel l'élément d'actionnement (3) est couplé en mouvement dans une première position de commutation du couplage (2) commutable avec l'amortisseur (4), et dans lequel l'élément d'actionnement (3) est librement mobile dans une deuxième position de commutation du couplage (2) commutable indépendamment de l'amortisseur (4).

3. Système d'amortissement selon la revendication 1 ou 2, **caractérisé en ce que** les éléments de couplage (20) dans la deuxième position de commutation de l'organe de commutation (6) sont mobiles dans une position dans laquelle le composant d'amortissement (4b) ne se couple pas avec la partie de retenue (18).

4. Système d'amortissement selon la revendication l'une quelconque des revendications 1 à 3, **caractérisé en ce que** la partie de retenue (18) est formée par le boîtier d'amortisseur ou par un tenon central.

5. Système d'amortissement selon l'une quelconque des revendications 1 à 4, **caractérisé en ce que** la partie de retenue (18) présente au niveau de son bord circonférentiel des évidements (21) pour la réception des éléments de couplage (20).

6. Système d'amortissement selon l'une quelconque des revendications 1 à 5, **caractérisé en ce que** les éléments de couplage (20) peuvent être amenés dans la première position de commutation en appui sur des surfaces inclinées (22) de la partie de retenue (18), dans lequel les éléments de couplage (20) sont en liaison par force aussi bien avec l'élément de retenue (18) qu'avec un des composants d'amortissement (4a, 4b).

7. Système d'amortissement selon l'une quelconque des revendications 1 à 6, **caractérisé en ce que** les éléments de couplage (20) sont mobiles par rapport à l'élément de retenue (18) par actionnement de l'organe de commutation (6), de préférence rotatifs à l'intérieur d'une plage angulaire entre 0° et 30°.

8. Système d'amortissement selon l'une quelconque des revendications 1 à 7, **caractérisé en ce que** les éléments de couplage (20) sont logés dans ou au niveau d'une cage (19), dans lequel la cage (19) est mobile par rapport à la partie de retenue (18) par le biais de l'actionnement de l'organe de commutation (6) ainsi que par le biais d'un mécanisme de transmission (27) actionnable par l'organe de commutation (6).

9. Système d'amortissement selon la revendication 8, **caractérisé en ce que** le mécanisme de transmission (27) convertit un mouvement linéaire de l'organe de commutation (6) en un mouvement rotatif de la cage (19).

10. Système d'amortissement selon la revendication 8 ou 9, **caractérisé en ce que** la cage (19) est précontrainte en direction de la position de blocage par un ressort (32).

11. Système d'amortissement selon l'une quelconque des revendications 1 à 10, **caractérisé en ce qu'**un mécanisme de rappel (23) est prévu, par le biais duquel un élément d'actionnement (3) du système d'amortissement (1) est mobile après amortissement dans une position de départ pour la prochaine course d'amortissement.

12. Charnière de meuble, guidage d'extraction pour tiroirs ou mécanisme de réglage pour le déplacement d'un clapet de meuble, en particulier relevable, avec un système d'amortissement selon l'une quelconque des revendications 1 à 11.
